# EUROPEAN PATENT APPLICATION

(11) **EP 3 693 909 A1**
(43) Date of publication of application: **12.08.2020**
(21) Application number: 19219145.0
(22) Date of filing: 20.12.2019
(51) Int. Cl.: G06Q 20/20, G06Q 20/34, G07F 17/00, G06Q 30/06

(54) **METHOD AND SYSTEM FOR OFFERING VALUE-ADDED SERVICES ON TRANSACTIONS**

(30) Priority: 07.02.2019 SG 10201901049S
(71) Applicant: Mastercard International Incorporated, New York, NY 10577 (US)
(72) Inventor: BHARGAVA, Vidit, Pune-411007 Maharashtra (IN); SAB, Haseena Pazrvin Khasim, Pune-411028 Maharashtra (IN)
(74) Representative: Barker Brettell LLP

(57) **Abstract**

A method (700) and a system for offering value-added services on a transaction initiated at a terminal device are provided. The method (700) includes generating (702) a reference identifier for the transaction by a server. The server stores (704) the reference identifier and service details of the value-added services that are applicable on the transaction in a database, and communicates the reference identifier to the terminal device. The server (706) receives a service request for offering a first value-added service on the transaction from the terminal device. The service request includes the reference identifier. Based on the reference identifier included in the service request, the server retrieves (708) the service details of the first value-added service from the database and communicates (710) a service response including the retrieved service details to the terminal device. Based on the service response, the first value-added service is offered on the transaction.

## Description

### FIELD OF THE INVENTION

Various embodiments of the present invention relate generally to transaction processing systems. More specifically, various embodiments of the present invention relate to a method and a system for offering value-added services on transactions.

### BACKGROUND

Terminal devices, these days, have the capability to run or execute service applications that offer value-added services (such as a loyalty points service, a reward points service, or an instalment service) on transactions performed at the terminal devices. Such value-added services provide additional benefits to users on the transactions.

Generally, these service applications have limited or no access to a transaction card number of a transaction card used for performing a transaction at a terminal device. For example, the service applications may only have access to an encrypted transaction card number. In another example, the terminal device may reject to share the transaction card number with the service applications due to security reasons. In such scenarios where the transaction card number is a mandatory requirement for offering the value-added services on the transaction, the service applications may be unable to offer the value-added services. Thus, a user who had initiated the transaction is unable to avail the value-added services on the transaction.

In light of foregoing, there exists a need for a solution that allows service applications running on a terminal device to offer value-added services on a transaction without requiring access to a corresponding transaction card number.

### SUMMARY

In an embodiment of the present invention, a method for offering value-added services on a transaction initiated at a terminal device is provided. A reference identifier for the transaction is generated by a server. The reference identifier and service details of one or more value-added services that are applicable on the transaction are stored in a database by the server. The reference identifier is communicated to the terminal device. A service request is received by the server from the terminal device for offering a first value-added service of the one or more value-added services on the transaction. The service request includes the reference identifier. Based on the reference identifier included in the service request, the service details of the first value-added service are retrieved by the server from the database. A service response including the retrieved service details is communicated by the server to the terminal device for offering the first value-added service on the transaction.

In another embodiment of the present invention, a system for offering value-added services on a transaction initiated at a terminal device is provided. The system includes a payment network server that is configured to generate a reference identifier for the transaction. The payment network server stores the reference identifier and service details of one or more value-added services that are applicable on the transaction in a database. The reference identifier is communicated to the terminal device. The server receives, from the terminal device, a service request including the reference identifier for offering a first value-added service of the one or more value-added services on the transaction. The server retrieves the service of the first value-added service from the database based on the reference identifier included in the service request. The server communicates to the terminal device a service response including the retrieved service details for offering the first value-added service on the transaction.

### BRIEF DESCRIPTION OF THE DRAWINGS

The accompanying drawings illustrate the various embodiments of systems, methods, and other aspects of the invention. It will be apparent to a person skilled in the art that the illustrated element boundaries (e.g., boxes, groups of boxes, or other shapes) in the figures represent one example of the boundaries. In some examples, one element may be designed as multiple elements, or multiple elements may be designed as one element. In some examples, an element shown as an internal component of one element may be implemented as an external component in another, and vice versa.

Various embodiments of the present invention are illustrated by way of example, and not limited by the appended figures, in which like references indicate similar elements:
**FIG. 1** is a block diagram that illustrates an environment for offering value-added services on a transaction, in accordance with an embodiment of the present invention;
**FIGS. 2A** **and** **2B**, collectively represent a process flow diagram that illustrates an exemplary scenario for offering value-added services on a transaction initiated at a terminal device of FIG. 1, in accordance with an embodiment of the present invention;
**FIG. 3** is an exemplary scenario that illustrates user interface (UI) screens that are rendered by the terminal device of FIG. 1 for enabling a user to perform a transaction and avail value-added services on the transaction, in accordance with an embodiment of the present invention;
**FIG. 4** is a block diagram that illustrates the terminal device of FIG. 1, in accordance with an embodiment of the present invention;
**FIG. 5A** is a block diagram that illustrates the payment network server of FIG. 1, in accordance with an embodiment of the present invention;
**FIG. 5B** is a table that illustrates an exemplary database stored in a memory of the payment network server of FIG. 1, in accordance with an embodiment of the present invention;
**FIG. 6** represents a flow chart that illustrates a method for offering value-added services on a transaction performed at the terminal device of FIG. 1, in accordance with an embodiment of the present invention;
**FIG. 7** represents a high-level flow chart that illustrates a method for offering value-added services on a transaction performed at the terminal device of FIG. 1, in accordance with an embodiment of the present invention; and
**FIG. 8** is a block diagram that illustrates system architecture of a computer system, in accordance with an embodiment of the present invention.

Further areas of applicability of the present invention will become apparent from the detailed description provided hereinafter. It should be understood that the detailed description of exemplary embodiments is intended for illustration purposes only and is, therefore, not intended to necessarily limit the scope of the invention.

### DETAILED DESCRIPTION

The present invention is best understood with reference to the detailed figures and description set forth herein. Various embodiments are discussed below with reference to the figures. However, those skilled in the art will readily appreciate that the detailed descriptions given herein with respect to the figures are simply for explanatory purposes as the methods and systems may extend beyond the described embodiments. In one example, the teachings presented and the needs of a particular application may yield multiple alternate and suitable approaches to implement the functionality of any detail described herein. Therefore, any approach may extend beyond the particular implementation choices in the following embodiments that are described and shown.

References to "an embodiment", "another embodiment", "yet another embodiment", "one example", "another example", "yet another example", "for example", and so on, indicate that the embodiment(s) or example(s) so described may include a particular feature, structure, characteristic, property, element, or limitation, but that not every embodiment or example necessarily includes that particular feature, structure, characteristic, property, element or limitation. Furthermore, repeated use of the phrase "in an embodiment" does not necessarily refer to the same embodiment.

### OVERVIEW

For security reasons, service applications executed by a terminal device may have limited or no access to a transaction card number corresponding to a transaction initiated at the terminal device. For example, the terminal device may reject to share the transaction card number with the service applications. In another example, the service applications may only have access to an encrypted format of the transaction card number. In such a scenario, the service applications may be unable to offer value-added services, for which the transaction card number is a mandatory requirement, on the transaction. Thus, preventing a user, who has performed the transaction, from an opportunity to avail the value-added service on the transaction.

Various embodiments of the present invention provide a method and a system that solve the abovementioned problems by offering value-added services on transactions without requiring access to corresponding transaction card numbers. When a transaction is initiated at a terminal device, a payment network server communicates an authorization request for authorizing the transaction to an issuer and receives an authorization response from the issuer. The payment network server generates a reference identifier for the transaction when the authorization response indicates that the transaction is authorized and extracts various transaction parameters from the authorization response. Based on the transaction parameters, the payment network server determines an eligibility of the transaction for various value-added services. The payment network server then stores, in a database, the extracted transaction parameters and service details of the value-added services for which the transaction is determined to be eligible. The payment network server further stores the reference identifier in the database, such that the transaction parameters and the service details that are stored in the database are accessible by way of the reference identifier. The payment network server communicates the authorization response including the reference identifier to the terminal device. A service application running on the terminal device accesses the authorization response and triggers a service request for a value-added service. The service request includes the reference identifier. The payment network server receives the service request from the terminal device. The payment network server retrieves the service details of the value-added service from the database by using the reference identifier included in the service request. The payment network server then communicates a service response including the retrieved service details to the terminal device and the terminal device presents the service details of the value-added service through a user interface. A user, who has initiated the transaction, may choose to opt for the value-added service on the transaction based on the presented service details.

Thus, the method and system of the present invention provide the service applications, running on the terminal device, the ability to offer the value-added services on the transaction without requiring access to the transaction card number.

### TERMS DESCRIPTION (in addition to plain and dictionary meaning)

Transaction card is a payment means, such as a debit card, a credit card, a prepaid card, a gift card, a promotional card, a contactless card, an electronic cash card, and/or like, that is linked to an account and holds identification information of the account. The transaction card has a unique transaction card number and may be used to perform various transactions, such as deposits and cash-withdrawals, credit transfers, purchase payments, and the like, from the account to which it is linked. The transaction card may be a physical card or a virtual card. The transaction card may be radio frequency identification (RFID) or near field communication (NFC) enabled for performing contactless transactions.

Terminal device is a computing device affiliated with a financial institution, such as a bank (hereinafter "acquirer"). The terminal device enables users to perform various electronic transactions, such as cash withdrawals, cash deposits, or the like. Examples of the terminal device include, but are not limited to, a point-of-sale (POS) device, a point-of-purchase (POP), a point-of-interaction (POI), or the like.

Issuer is a financial institution where accounts of several users are established and maintained. The issuer ensures payment for authorized transactions in accordance with various payment network regulations and local legislation.

Payment networks, such as those operated by Mastercard®, process transactions between acquirers and issuers. Processing by a payment network includes steps of authorization, clearing, and settlement.

Server is a physical or cloud data processing system on which a server program runs. The server may be implemented in hardware or software, or a combination thereof. In one embodiment, the server may be implemented in computer programs executing on programmable computers, such as personal computers, laptops, or a network of computer systems. The server may correspond to one of a payment network server, an acquirer server, or an issuer server.

Authorization response is a response generated by an issuer based on authorization of a transaction. The authorization response indicates whether the transaction is authorized. The authorization response may be pursuant to one or more standards for the interchange of transaction messages, such as the ISO8583 standard, and may include various data fields, such as data elements (DEs), for storing transaction parameters of the transaction.

Value-added services are services that are offered on transactions performed at a terminal device. The value-added services allow a user, who has performed the transaction, to avail additional benefits on the transaction. Examples of such value-added services may include, but are not limited to, instalment services, loyalty points services, reward points services, or the like.

A service request is a request triggered by a service application that runs on a terminal device for offering a value-added service on the transaction. The service request includes a reference identifier corresponding to the transaction. The service request may be triggered when the transaction is authorized by an issuer corresponding to the transaction.

A reference identifier is a code that uniquely identifies a transaction. The reference identifier is generated by a payment network and included in an authorization response as a data field. The reference identifier is used by the payment network to look up a database that stores transaction parameters of various transactions and service details of various value-added services that are applicable on the transactions.

A service response is a response generated by a payment network corresponding to a service request received from a terminal device. The service response includes service details of a corresponding value-added service.

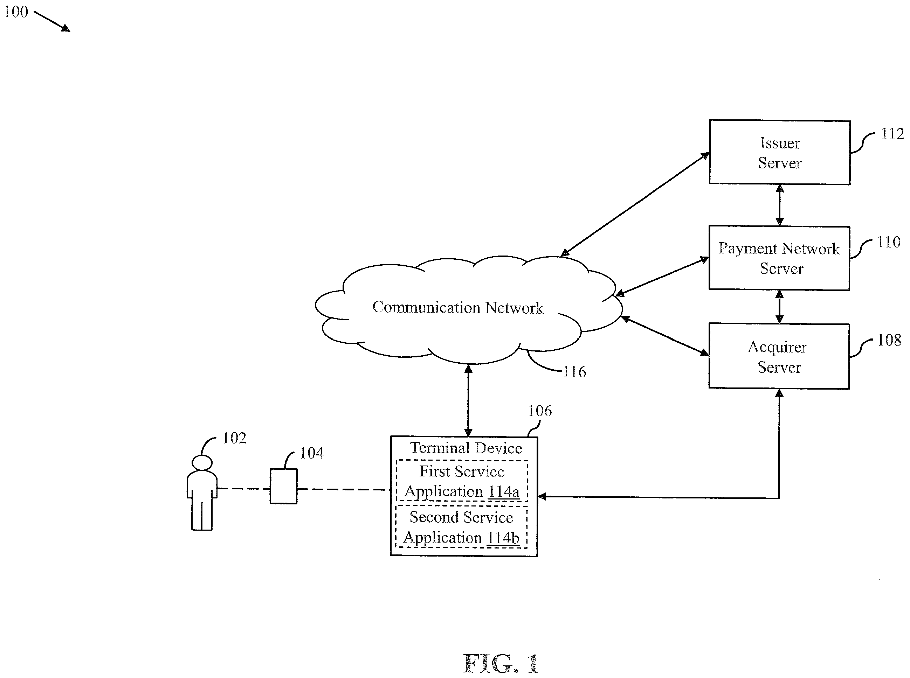

FIG. 1 is a block diagram that illustrates an environment 100 for offering value-added services on a transaction, in accordance with an embodiment of the present invention. The environment 100 includes a user 102 in procession of a transaction card 104. The environment 100 further includes a terminal device 106, an acquirer server 108, a payment network server 110, and an issuer server 112. The terminal device 106, the acquirer server 108, the payment network server 110, and the issuer server 112 communicate with each other by way of a communication network 116 or through separate communication networks established therebetween.

The user 102 is an individual, who is an account holder of a user account maintained by a financial institution, such as an issuer. The issuer may have issued the transaction card 104 to the user 102 for performing transactions from the user account. The transaction card 104 is linked to the user account and stores identification information of the user account (hereinafter, referred to as "account information" of the user account) in the form of an electronic chip or a machine-readable magnetic strip. The account information may include an account number, a name of an account holder (i.e., the user 102), or the like. The transaction card 104 further has a unique transaction card number, an expiry date, a card security code, and a card type associated with it. The unique card number, the expiry date, the card security code, and the card type are collectively referred to as card details of the transaction card 104. In one embodiment, the transaction card 104 is a physical card used for performing the transactions at the terminal device 106. In another embodiment, the transaction card 104 is a virtual card stored in a memory of a user device (not shown) of the user 102. In one embodiment, the transaction card 104 may be eligible for various value-added services such as, but not limited to, an instalment service, a reward points service, a loyalty points service, or the like, offered by a payment network, the issuer, an acquirer, a third-party entity, or the like. Examples of the transaction card 104 may include a credit card, a debit card, a membership card, a promotional card, a charge card, a prepaid card, a gift card, an electronic cash card, or the like.

The terminal device 106 is an electronic device that allows users (such as the user 102) to perform transactions (such as money transfer, purchase payments, cash deposit, cash-withdrawal, and/or balance enquiry) from the corresponding user accounts. The terminal device 106 is associated with a financial institution, such as an acquirer. Examples of the terminal device 106 include a POS device, a POP device, a POI device, or the like. The terminal device 106 may be capable of reading the card details of the transaction card 104 when the transaction card 104 is used at the terminal device 106. For example, if the transaction card 104 is a magnetic strip card, the terminal device 106 decodes the data in the magnetic strip when the transaction card 104 is used at the terminal device 106. In another example, when the transaction card 104 is a near-field communication (NFC) enabled card, the terminal device 106 reads information stored on the NFC tags or chips. In one embodiment, the terminal device 106 may further allow the user 102 to perform cardless transactions, as known by those skilled in the art.

When the user 102 initiates a transaction at the terminal device 106, the terminal device 106 generates an authorization request for authorization of the transaction and communicates the authorization request to the acquirer server 108. The authorization request includes various data elements that represent transaction parameters of the transaction and are pursuant to one or more standards for the interchange of transaction messages, such as the ISO8583 standard. The transaction parameters may include a transaction card number, account information, a transaction amount, a timestamp of the transaction, or the like. In one embodiment, the terminal device 106 may be configured to run or execute various service applications that offer value-added services (e.g., an instalment service, a reward points service, a loyalty points service, or the like). In a non-limiting example, the terminal device 106 is shown to execute first and second service applications 114A and 114B.

The acquirer server 108 is a computing server that is operated by the acquirer. The acquirer server 108 receives the authorization request from the terminal device 106 and transmits the authorization request to the payment network server 110. The acquirer server 108 further receives an authorization response for the transaction from the payment network server 110.

The payment network server 110 is a computing server that is operated by a payment network. The payment network server 110 represents an intermediate entity between the acquirer server 108 and the issuer server 112 for authorizing and funding the transactions performed by way of the transaction card 104. In one embodiment, the payment network server 110 may host the first and second service applications 114A and 114B that are executable on the terminal device 106 for offering first and second value-added services, respectively. The payment network server 110 receives the authorization request from the acquirer server 108 and communicates the authorization request to a corresponding issuer server (such as the issuer server 112) for authorization. The payment network server 110 receives the authorization response from the issuer server 112.

In one embodiment, the payment network server 110 generates a reference identifier for the transaction based on the authorization response received from the issuer server 112. The reference identifier may be a reference code that uniquely defines the transaction. Examples of the reference code may include, but are not limited to, an alphanumeric code, a bar code, a quick response code, or the like. The payment network server 110 extracts transaction parameters from the authorization response. The transaction parameters include parameters such as the transaction card number of the transaction card 104, a transaction amount, a timestamp, a merchant ID, a terminal device ID, or the like. The payment network server 110 also determines an eligibility of the transaction for the first and second value-added services. The payment network server 110 further stores the transaction parameters, the reference identifier, and service details of the first and second value-added services in a database associated with the payment network server 110. The database may be stored in a memory of the payment network server 110.

The payment network server 110 further updates the authorization response to include the reference identifier. For example, the payment network server 110 may insert the reference identifier in an empty data element (such as DE 63) of the authorization response. The payment network server 110 then communicates the authorization response including the reference identifier to the acquirer server 108. In one embodiment, the payment network server 110 may receive a service request for one of the first or second value-added service from the terminal device 106. The service request includes the reference identifier.

The payment network server 110 retrieves the service details by using the reference identifier and generates a service response. The service response includes the retrieved service details. The payment network server 110 further communicates the service response to the terminal device 106 for offering the first or second value-added service on the transaction. Examples of various payment networks include Mastercard, Discover®, Diners Club®, or the like. It will be apparent to a person of skill in the art that the scope of the payment network server 110 is not limited to host two service applications, i.e., the first and second service applications 114A and 114B.

The issuer server 112 is a computing server that is operated by the issuer. The issuer is a financial institution that manages user accounts of multiple users. Account details of the user accounts, such as the user account of the user 102, established with the issuer are stored as account profiles in a memory (not shown) of the issuer server 112 or on a cloud server associated with the issuer server 112. The account details may include an account balance, an available credit line, details of an account holder, transaction history of the account holder, account information, or the like. The details of the account holder may include name, age, gender, physical attributes, registered contact number, alternate contact number, registered e-mail ID, or the like of the account holder. The issuer server 112 sets eligibility criteria for the transaction card 104 based on which the first and second value-added services may be availed on the transaction performed by way of the transaction card 104.

The issuer server 112 receives the authorization request from the payment network server 110 and authorizes the transaction. Based on the authorization of the transaction, the issuer server 112 generates the authorization response indicating whether the authorization is successful. Methods for processing transactions via the issuer server 112 will be apparent to persons having skill in the art and may include processing a transaction via the traditional four-party system or the traditional three-party system.

The first and second service applications 114A and 114B are executable on the terminal device 106 and enable the user 102 to avail the first and second value-added services on the transaction. The first and second service applications 114A and 114B may be hosted by the payment network server 110 or any other financial institution. In a non-limiting example, it is assumed that the first and second service applications 114A and 114B are hosted by the payment network server 110.

Examples of the acquirer server 108, the payment network server 110, and the issuer server 112 include, but are not limited to, computers, laptops, mini-computers, mainframe computers, any non-transient and tangible machines that can execute a machine-readable code, cloud-based servers, distributed server networks, a network of computer systems, or a combination thereof.

The communication network 116 is a medium through which content and messages are transmitted between the terminal device 106, the acquirer server 108, the payment network server 110, the issuer server 112, or other entities that are pursuant to one or more standards for the interchange of transaction messages, such as the ISO8583 standard. Examples of the communication network 116 include, but are not limited to, a wireless fidelity network, a light fidelity (Li-Fi) network, a local area network (LAN), a wide area network (WAN), a metropolitan area network (MAN), a satellite network, the Internet, a fiber optic network, a coaxial cable network, an infrared (IR) network, a radio frequency (RF) network, and combinations thereof. Various entities in the environment 100 may connect to the communication network 116 in accordance with various wired and wireless communication protocols, such as Transmission Control Protocol and Internet Protocol (TCP/IP), User Datagram Protocol (UDP), Long Term Evolution (LTE) communication protocols, or any combination thereof.

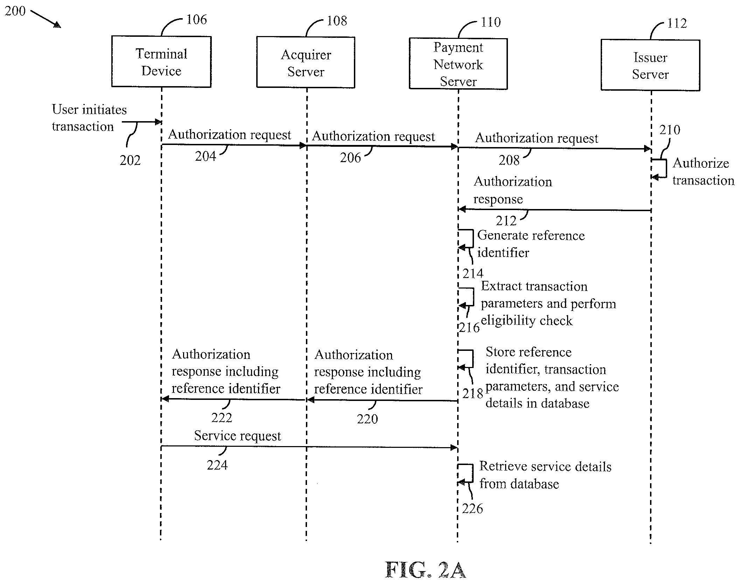

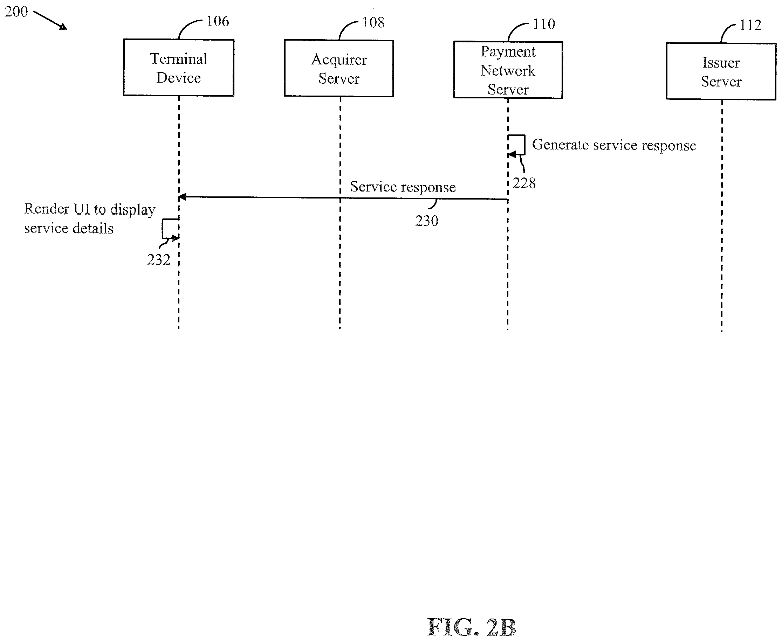

FIGS. 2A and 2B, collectively represent a process flow diagram 200 that illustrates an exemplary scenario for offering value-added services on a transaction performed on the terminal device 106, in accordance with an embodiment of the present invention. The process flow diagram 200 involves the terminal device 106, the acquirer server 108, the payment network server 110, and the issuer server 112.

A transaction is initiated by the user 102 at the terminal device 106 (as shown by arrow 202). The user 102 may initiate the transaction by using the transaction card 104. The terminal device 106 generates an authorization request and communicates the authorization request to the acquirer server 108 (as shown by arrow 204). The authorization request includes the transaction parameters (such as the transaction card number of the transaction card 104, a transaction amount, a timestamp, a merchant ID, a terminal device ID, or the like) of the transaction. Based on the authorization request, the acquirer server 108 identifies a payment network that corresponds to the transaction, as known by those skilled in the art. The acquirer server 108 communicates the authorization request to the payment network server 110 of the identified payment network (as shown by arrow 206). The payment network server 110 receives the authorization request and identifies the issuer that corresponds to the transaction, as known by those skilled in the art. Once the issuer is identified, the payment network server 110 communicates the authorization request to the issuer server 112 of the identified issuer (as shown by arrow 208). The issuer server 112 authorizes the transaction (as shown by arrow 210) and communicates an authorization response to the payment network server 110 (as shown by arrow 212). The authorization response includes various data elements that represent the transaction parameters of the transaction and a response code. The response code indicates whether the transaction is authorized or not.

When the authorization response indicates that the authorization is successful, the payment network server 110 generates a reference identifier for the transaction (as shown by arrow 214). The payment network server 110 extracts the transaction parameters from the authorization response and performs an eligibility check for determining whether the first and second value-added services are applicable on the transaction (as shown by arrow 216). In a non-limiting example, it is assumed that the transaction is eligible for the first and second value-added services. The payment network server 110 stores the reference identifier, the transaction parameters, and service details of the first and second value-added services for which the transaction is determined to be eligible in the database (as shown by arrow 218). The service details include, but are not limited to, a service type, a service eligibility indicator, a set of service parameters, or the like. The payment network server 110 communicates the authorization response including the reference identifier to the acquirer server 108 (as shown by arrow 220). For example, the payment network server 110 may update a data element, such as DE 63, in the authorization response to insert the reference identifier. The acquirer server 108 communicates the authorization response including the reference identifier to the terminal device 106 (as shown by arrow 222). In other words, the reference identifier generated by the payment network server 110 is communicated to the terminal device 106.

The first and second service applications 114A and 114B may trigger service requests for the first and second value-added service, respectively, when the authorization response including the reference identifier is received. For triggering the service requests, the first and second service applications 114A and 114B may extract the reference identifier included in the authorization response. In a non-limiting example, it is assumed that the first service application 114A triggers a service request for the first value-added service. Since the first service application 114a serves as a gateway to the payment network server 110, the terminal device 106 communicates the service request triggered by the first service application 114a to the payment network server 110 (as shown by arrow 224). The service request includes the reference identifier. The payment network server 110 receives the service request.

The payment network server 110 uses the reference identifier included in the service request for retrieving the service details of the first value-added service from the database (as shown by arrow 226). The payment network server 110 generates a service response based on the retrieved service details (as shown by arrow 228). The service response may include the service type, the service eligibility indicator, the set of service parameters, or the like. In one example, when the service eligibility indicator indicates that the transaction is not eligible for the first value-added service, the service response may only include the service eligibility indicator to notify the terminal device 106 that the transaction is not eligible for the first value-added service.

The payment network server 110 communicates the service response to the terminal device 106 (as shown by arrow 230). Based on the service response, the terminal device 106 renders a user interface (UI) thereon to display the service details of the first value-added service to the user 102. The terminal device 106 may render the UI by way of the first service application 114A running on the terminal device 106 (as shown by arrow 232).

It will be apparent to a person of ordinary skill in the art that the scope of the invention is not limited to the use of the transaction card 104 for initiating the transaction. In another embodiment, the user 102 may initiate the transaction by any other means supported by the terminal device 106 without deviating from the scope of the invention.

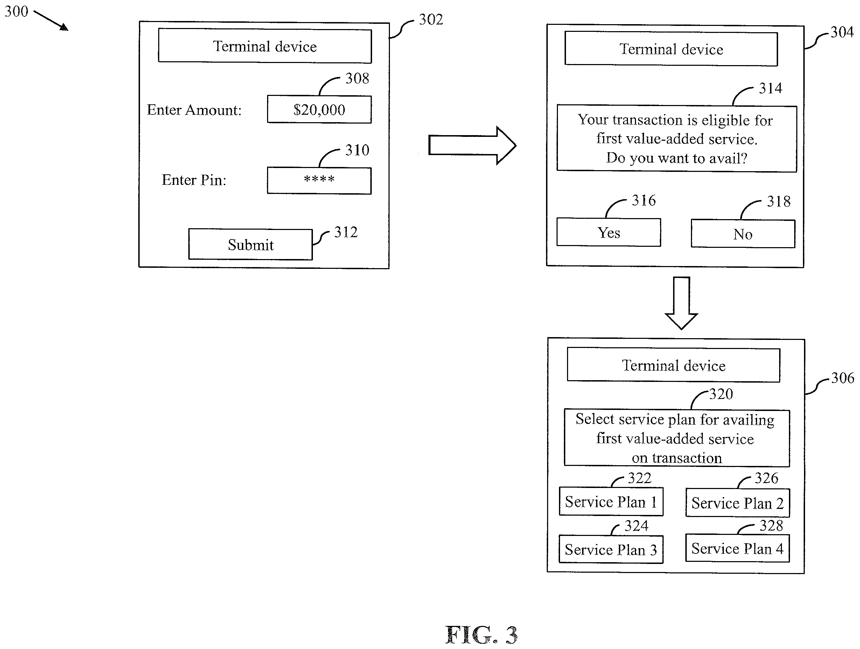

FIG. 3 is an exemplary scenario 300 that illustrates first through third UI screens 302, 304, and 306 that are rendered by the terminal device 106 for enabling the user 102 to perform the transaction and avail the first or second value-added service on the transaction, in accordance with an embodiment of the present invention.

When the user 102 interacts with the terminal device 106 for requesting the transaction, the first UI screen 302 is rendered on a display (not shown) of the terminal device 106. The first UI screen 302 displays a first input box 308 that allows the user 102 to enter the transaction amount for the transaction. In one embodiment, the first UI screen 302 may display a second input box 310 that allows the user 102 to enter authentication information (for example, one-time password, personal identification number, and/or alphanumeric password) associated with the transaction card 104. In another embodiment, when the terminal device 106 conducts biometric authentication by way of fingerprint, voiceprint, faceprint, retina scan, and/or the like, the first UI screen 302 may not display the second input box 310. The first UI screen 302 further displays a first submit button 312, which is selectable by the user 102. When the user 102 provides the transaction amount and the authentication information in the first and second input boxes 308 and 310, respectively, and selects or activates the first submit button 312, the terminal device 106 communicates the authorization request to the acquirer server 108.

After the transaction is authorized by the issuer server 112, the terminal device 106 receives the authorization response including the reference identifier from the payment network server 110. One of the first and second service applications 114A and 114B may trigger a service request including the reference identifier, which is transmitted to the payment network server 110 by the terminal device 106. In a non-limiting example, it is assumed that the first service application 114A triggers the service request for the first value-added service. The payment network server 110 receives the service request including the reference identifier. Based on the reference identifier, the payment network server 110 looks up the database to extract the service details of the first value-added service. The payment network server 110 then communicates the service response including the extracted service details to the terminal device 106. After receiving the service response, the terminal device 106 renders the second UI screen 304 and displays a message in a first text box 314 to notify the user 102 that the transaction is eligible for the first value-added service. The message further prompts the user 102 to select a 'Yes' button 316 displayed by the second UI screen 304 if the user 102 wants to avail the first value-added service and to select a 'No' button 318 displayed by the second UI screen 304 if the user 102 does not want to avail the first value-added service. When the user 102 selects or activates the 'Yes' button 316, the terminal device 106 renders the third UI screen 306.

The third UI screen 306 displays another message in a second text box 320 for prompting the user 102 to select a service plan for the first value-added service from a list of available plans (i.e., service parameters). In a non-limiting example, the list of available service plans is shown to include service plans 1, 2, 3, and 4 represented by buttons 322, 324, 326, and 328, respectively. The user 102 may select any one of the buttons 322-328. The terminal device 106 communicates a selection response to the payment network server 110 indicating the service plan selected by the user 102. Based on the selection response, the corresponding service plan is activated or availed on the transaction.

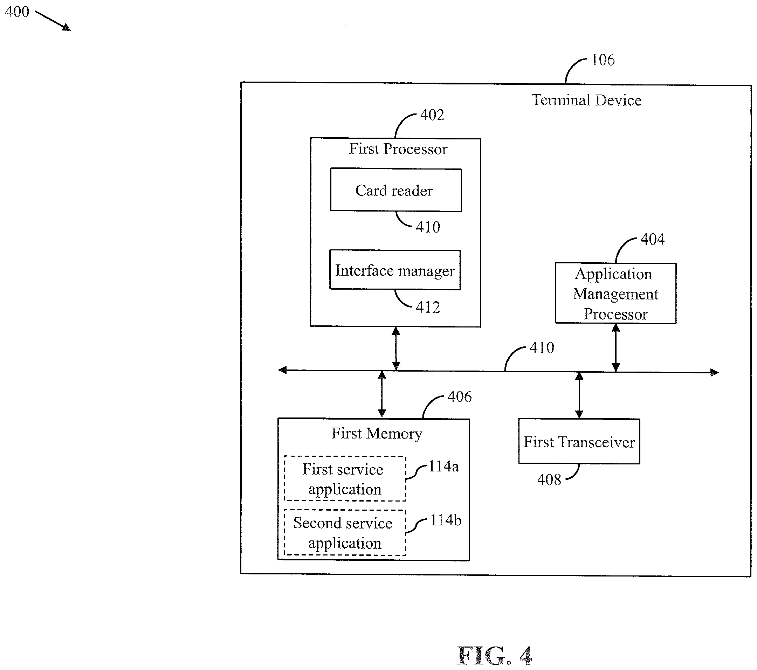

FIG. 4 is a block diagram that illustrates the terminal device 106, in accordance with an embodiment of the present invention. The terminal device 106 includes a first processor 402, an application management processor 404, a first memory 406, and a first transceiver 408. The first processor 402, the application management processor 404, the first memory 406, and the first transceiver 408 communicate with each other by way of a first communication bus 410.

The first processor 402 includes suitable logic, circuitry, interfaces, and/or codes, executable by the circuitry, to process transactions performed at the terminal device 106. The first processor 402 generates the authorization request for the transaction initiated by the user 102 at the terminal device 106. Examples of the first processor 402 may include, but are not limited to, an application specific integrated circuit (ASIC) processor, a reduced instruction set computer (RISC) processor, a complex instruction set computer (CISC) processor, a field programmable gate array (FPGA), or the like. The first processor 402 includes a card reader 412 and an interface manager 414.

The card reader 412 may include suitable logic, circuitry, interfaces, and/or codes, executable by the circuitry, to read the account information stored in the transaction card 104. For example, when the user 102 uses the transaction card 104 at the terminal device 106 to perform the transaction, the card reader 412 reads the account information stored in the transaction card 104. The interface manager 414 renders the UI screens 302-306 (as described in FIG. 3) on the display of the terminal device 106 based on instructions received from the first processor 402. For example, when the first processor 402 determines that the transaction is eligible for the first value-added service, the interface manager 414 renders the second UI screen 304 on the display of the terminal device 106. Further, when the 'Yes' button 316 is selected by the user 102, the interface manager 414 renders the third UI screen 306 on the display of the terminal device 106.

The application management processor 404 manages the service applications (e.g., the first and second service applications 114a and 114b) that run on the terminal device 106 and offer the value-added services (e.g., the first and second value-added services) on the transactions performed at the terminal device 106. The application management processor 404 generates the service request for the first value-added service as described in FIGS. 2A and 2B. The application management processor 404 receives the service response corresponding to the service request and offers the first value-added service on the transaction based on the service response.

The first memory 406 includes suitable logic, circuitry, interfaces, and/or codes, executable by the circuitry, to store the instructions that are executed by the first processor 402 and the application management processor 404 for performing corresponding operations. The first memory 406 further stores the logic, instructions, and/or codes pertaining to the first and second service applications 114A and 114B. Examples of the first memory 406 may include, but are not limited to, a random-access memory (RAM), a read-only memory (ROM), a programmable ROM (PROM), and an erasable PROM (EPROM).

The first transceiver 408 transmits and receives data over the communication network 116 using one or more communication protocols. The first transceiver 408 transmits various requests and messages to the acquirer server 108 and the payment network server 110. For example, the first transceiver 408 transmits the authorization request to the acquirer server 108 and the service request to the payment network server 110. The first transceiver 408 further receives various requests and messages from the acquirer server 108 and the payment network server 110. For example, the first transceiver 408 receives the authorization response from the acquirer server 108 and the service response from the payment network server 110. Examples of the first transceiver 408 may include, but are not limited to, an antenna, a radio frequency transceiver, a wireless transceiver, a Bluetooth transceiver, an Ethernet port, a universal serial bus (USB) port, or any other device configured to transmit and receive data.

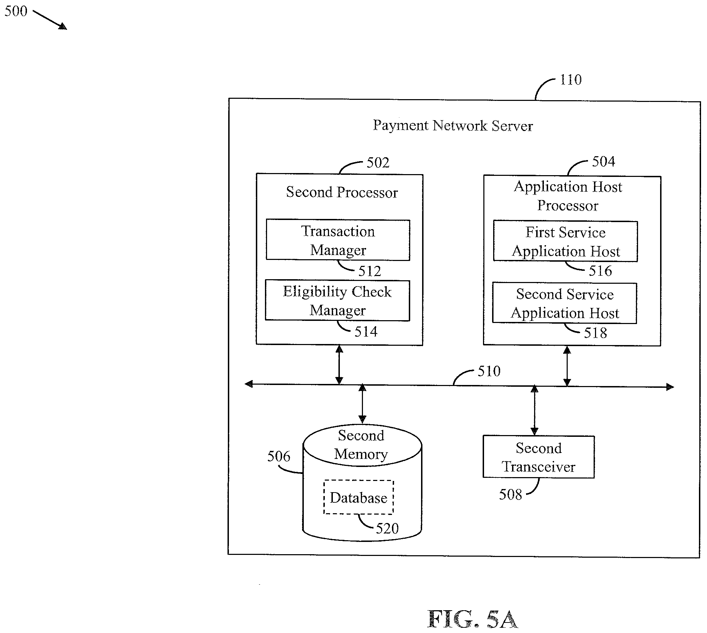

FIG. 5A is a block diagram that illustrates the payment network server 110 of FIG. 1, in accordance with an embodiment of the present invention. The payment network server 110 includes a second processor 502, an application host processor 504, a second memory 506, and a second transceiver 508. The second processor 502, the application host processor 504, the second memory 506, and the second transceiver 508 communicate with each other by way of a second communication bus 510.

The second processor 502 includes suitable logic, circuitry, interfaces, and/or codes, executable by the circuitry, to process transactions performed by way of the transaction card 104. Examples of the second processor 502 include, but are not limited to, an ASIC processor, a RISC processor, a CISC processor, an FPGA, or the like. The second processor 502 includes a transaction manager 512 and an eligibility check manager 514.

The transaction manager 512 performs one or more operations, as known to those skilled in the art, for processing the transactions that correspond to the payment network server 110. For example, the transaction manager 512 identifies an issuer that corresponds to a transaction and communicates the authorization request to the identified issuer. The transaction manager 512 generates the reference identifier for the transaction, as described in the foregoing description of FIGS. 2A and 2B. The transaction manager 512 further extracts the transaction parameters from the authorization response of the transaction. The eligibility check manager 514 checks whether the transaction is eligible for the first and second value-added services, when the authorization response is received by the payment network server 110.

The application host processor 504 includes suitable logic, circuitry, interfaces, and/or codes, executable by the circuitry, to host the first and second service applications 114A and 114B that are executable on the terminal device 106. The application host processor 504 hosts the first service application 114A by way of a first service application host 516 and the second service application 114B by way of a second service application host 518.

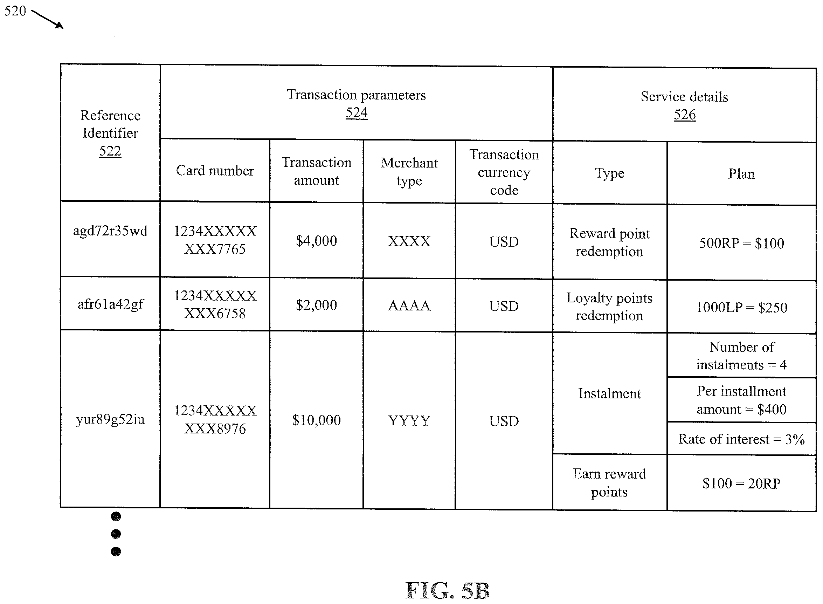

The second memory 506 includes suitable logic, circuitry, interfaces, and/or codes, executable by the circuitry, to store the instructions that are executed by the second processor 502 and the application host processor 504 for performing the corresponding operations. Examples of the second memory 506 may include, but are not limited to, a RAM, a ROM, a removable storage drive, an HDD, a flash memory, a solid-state memory, or the like. It will be apparent to a person skilled in the art that the scope of the invention is not limited to realizing the second memory 506 in the payment network server 110, as described herein. In another embodiment, the second memory 506 may be realized in form of a database or a cloud storage working in conjunction with the payment network server 110, without departing from the scope of the invention. The second memory 506 further stores the database (designated as "database 520") in which the second processor 502 stores the service details and the transaction parameters of the transaction, as described in the foregoing description of FIGS. 2A and 2B. FIG. 5B illustrates an example of the database 520 stored in the second memory 506.

Referring now to FIG. 5B, the database 520 include a reference identifiers column 522, a transaction parameters column 524, and a service details column 526. The reference identifiers column 522 stores reference identifiers generated by the transaction manager 512 for various transactions. The transaction parameters column 524 stores various transaction parameters, such as card number, transaction amount, merchant type, transaction currency code, or the like, extracted by the transaction manager 512 from authorization responses of the corresponding transactions. The service details column 526 include service details (such as service type, service plan, or the like) of various value-added services for which the corresponding transactions are determined to be eligible. For example, the reference identifier "yur89g52iu" in a third row of the database 520 corresponds to a transaction initiated by way of a transaction card having a transaction card number "1234xxxxxxxx8976". The transaction is eligible for two value-added services, i.e., instalments and earn reward points, as illustrated by the database 520. The reference identifiers in the reference identifiers column 522 may serve as pointers to the corresponding rows. When the service request including the reference identifier, for example "yur89g52iu", is received by the payment network server 110, the transaction manager 512 looks up in the database 520 by using the reference identifier and retrieves the service details corresponding to the reference identifier from the database 520. It will be apparent to a person of ordinary skill in the art that the database 520 is shown for illustrative purpose and should not be construed to limit the scope of the invention. The reference identifiers, the transaction parameters, and the service details illustrated in the database 520 are mere examples.

Referring back to FIG. 5A, the second transceiver 508 includes suitable logic, circuitry, interfaces, and/or codes, executable by the circuitry, to transmit and receive data over the communication network 116 using various wired and/or wireless communication protocols. The second transceiver 508 may receive various requests and messages from the terminal device 106, the acquirer server 108, and/or the issuer server 112. For example, the second transceiver 508 receives the authorization request from the acquirer server 108 and the service request from the terminal device 106 (as described in FIGS. 2A and 2B). The second transceiver 508 may further transmit various requests and messages to the terminal device 106, the acquirer server 108, and/or the issuer server 112. For example, the second transceiver 508 transmits the authorization request to the issuer server 112, the authorization response to the acquirer server 108, and the service response to the terminal device 106. Examples of the second transceiver 508 may include, but are not limited to, an antenna, a radio frequency transceiver, a wireless transceiver, a Bluetooth transceiver, an Ethernet port, a USB port, or any other device configured to transmit and receive data.

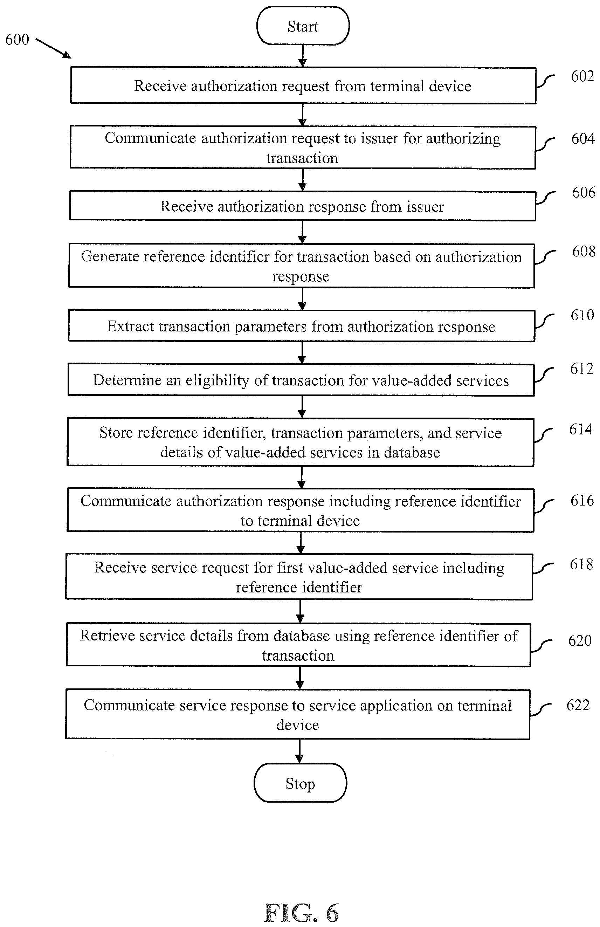

FIG. 6 represents a flow chart 600 that illustrates a method for offering value-added services on the transaction performed at the terminal device 106, in accordance with an embodiment of the present invention. The terminal device 106 may be utilized by the user 102 to perform the transaction by way of the transaction card 104. The terminal device 106 generates the authorization request for the transaction performed by the user 102. At step 602, the payment network server 110 receives the authorization request from the terminal device 106 via the acquirer server 108. At step 604, the payment network server 110 communicates the authorization request to the issuer server 112 for authorizing the transaction. At step 606, the payment network server 110 receives the authorization response from the issuer server 112. At step 608, the payment network server 110 generates the reference identifier for the transaction based on the authorization response. At step 610, the payment network server 110 extracts the transaction parameters from the authorization response. At step 612, the payment network server 110 determines the eligibility of the transaction for the first and second value-added services based on the authorization response. For example, the payment network server 110 may determine whether the transaction card number extracted from the authorization response satisfies the eligibility criteria for the first and second value-added services. In a scenario where the transaction card number satisfies the eligibility criteria, the transaction is determined to be eligible for the first and second value-added services.

At step 614, the payment network server 110 stores the reference identifier, the transaction parameters, and the service details of the first and second value-added services in the database 520. At step 616, the payment network server 110 communicates the authorization response including the reference identifier to the terminal device 106 via the acquirer server 108. At step 618, the payment network server 110 receives the service request for the first value-added service from the terminal device 106. The service request includes the reference identifier and is triggered by the first service application 114A running on the terminal device 106. At step 620, the payment network server 110 retrieves the service details of the first value-added service from the database 520 using the reference identifier included in the service request. At step 622, the payment network server 110 communicates the service response to the terminal device 106. The service response includes the service details of the first value-added service. Based on the service response, the terminal device 106 renders the second and third UI screens 304 and 306 to present the service details of the first value-added service to the user 102.

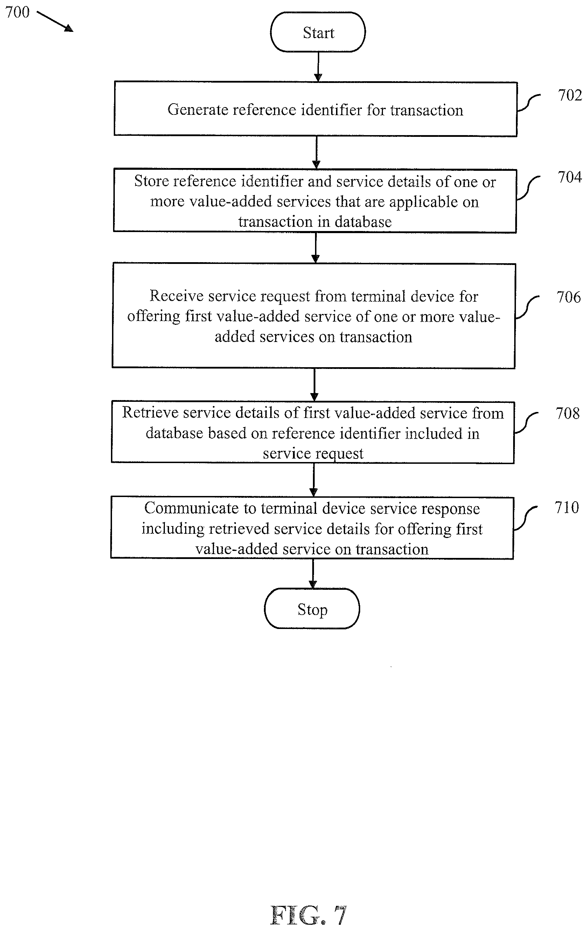

FIG. 7 represents a high-level flow chart 700 that illustrates the method for offering value-added services on the transaction performed at the terminal device 106, in accordance with an embodiment of the present invention. At step 702, the payment network server 110 generates the reference identifier for the transaction. At step 704, the payment network server 110 stores the reference identifier and the service details of one or more value-added services (e.g., the first and second value-added services) that are applicable on the transaction in the database 520. At step 706, the payment network server 110 receives the service request from the terminal device 106 for offering the first value-added service of the one or more value-added services on the transaction. The service request includes the reference identifier generated by the payment network server 110 for the corresponding transaction. At step 708, the payment network server 110 retrieves the service details of the first value-added service from the database 520 based on the reference identifier included in the service request. At step 710, the payment network server 110 communicates to the terminal device 106 the service response including the retrieved service details for offering the first value-added service on the transaction.

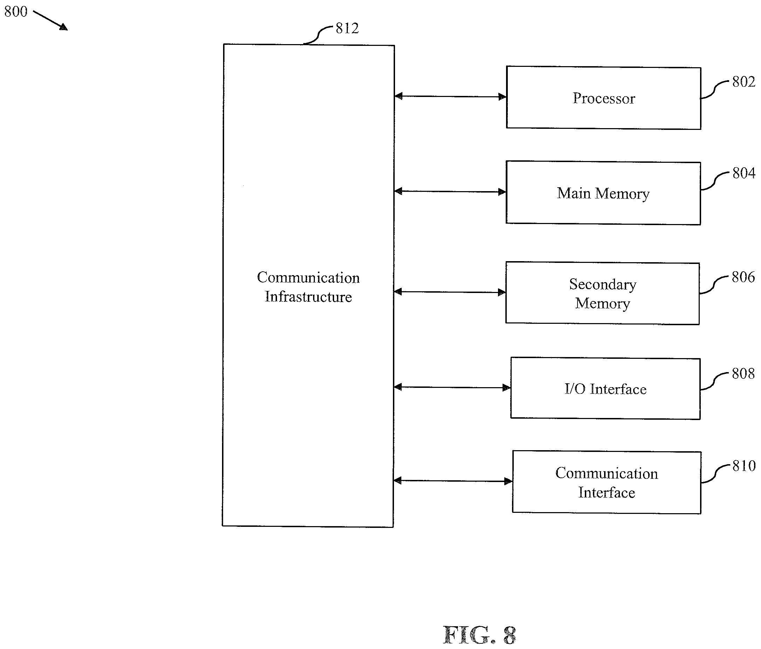

FIG. 8 is a block diagram 800 that illustrates system architecture of a computer system, in accordance with an embodiment of the present invention. An embodiment of present invention, or portions thereof, may be implemented as computer readable code on the computer system 800. In one example, the acquirer server 108, the payment network server 110, and the issuer server 112 may be implemented in the computer system 800 using hardware, software, firmware, non-transitory computer readable media having instructions stored thereon, or a combination thereof and may be implemented in one or more computer systems or other processing systems. Hardware, software, or any combination thereof may embody modules and components used to implement the methods of FIGS. 6 and 7.

The computer system 800 includes a processor 802 that may be a special-purpose or a general-purpose processing device. The processor 802 may be a single processor, multiple processors, or combinations thereof. The processor 802 may have one or more processor cores. In one example, the processor 802 is an octa-core processor. Further, the processor 802 may be connected to a communication infrastructure 804, such as a bus, message queue, multi-core message-passing scheme, and the like. The computer system 800 may further include a main memory 806 and a secondary memory 808. Examples of the main memory 806 may include RAM, ROM, and the like. The secondary memory 808 may include a hard disk drive or a removable storage drive, such as a floppy disk drive, a magnetic tape drive, a compact disc, an optical disk drive, a flash memory, and the like. Further, the removable storage drive may read from and/or write to a removable storage device in a manner known in the art. In one example, if the removable storage drive is a compact disc drive, the removable storage device may be a compact disc. In an embodiment, the removable storage unit may be a non-transitory computer readable recording media.

The computer system 800 further includes an input/output (I/O) interface 810 and a communication interface 812. The I/O interface 810 includes various input and output devices that are configured to communicate with the processor 802. Examples of the input devices may include a keyboard, a mouse, a joystick, a touchscreen, a microphone, and the like. Examples, of the output devices may include a display screen, a speaker, headphones, and the like. The communication interface 812 may be configured to allow data to be transferred between the computer system 800 and various devices that are communicatively coupled to the computer system 800. Examples of the communication interface 812 may include a modem, a network interface, i.e., an Ethernet card, a communications port, and the like. Data transferred via the communication interface 812 may correspond to signals, such as electronic, electromagnetic, optical, or other signals as will be apparent to a person skilled in the art. The signals may travel via a communications channel (not shown) which may be configured to transmit the signals to devices that are communicatively coupled to the computer system 800. Examples of the communications channel may include, but are not limited to, cable, fiber optics, a phone line, a cellular phone link, a radio frequency link, and the like.

The main memory 806 and the secondary memory 808 may refer to non-transitory computer readable mediums. These to non-transitory computer readable mediums may provide data that enables the computer system 800 to implement the methods illustrated in FIGS. 6 and 7. In an embodiment, the present invention is implemented using a computer implemented application, the computer implemented application may be stored in the main memory 806 and/or the secondary memory 808.

A person having ordinary skill in the art will appreciate that embodiments of the disclosed subject matter can be practiced with various computer system configurations, including multi-core multiprocessor systems, minicomputers, mainframe computers, computers linked or clustered with distributed functions, as well as pervasive or miniature computers that may be embedded into virtually any device. For instance, at least one processor such as the processor 802 and a memory such as the main memory 806 and the secondary memory 808 implements the above described embodiments. Further, the operations may be described as a sequential process, however some of the operations may in fact be performed in parallel, concurrently, and/or in a distributed environment, and with program code stored locally or remotely for access by single or multiprocessor machines. In addition, in some embodiments the order of operations may be rearranged without departing from the spirit of the disclosed subject matter.

The first and second service applications 114A and 114B, running on the terminal device 106, have the capability to extract the reference identifier included in the authorization response and trigger service requests. The payment network server 110 maintains the database 520 which includes the reference identifier and the service details of various value-added services applicable on the transaction. Hence, when the payment network server 110 receives the service requests including the reference identifier, the payment network server 110 uses the reference identifier to look up the database 520 to retrieve the service details for presenting to the user 102. Thus, technological improvements provided by the payment network server 110 enable the service applications (e.g., the first and second service applications 114A and 114B), running on the terminal device 106, to offer corresponding value-added services on the transaction without requiring access to the transaction card number. The payment network server 110 may utilize the technological improvements to offer benefits value-added services to the user 102 when the user 102 performs the transaction in comparison to the related techniques.

Techniques consistent with the present invention provide, among other features, systems and methods for offering value-added services on transactions. While various exemplary embodiments of the disclosed system and method have been described above it should be understood that they have been presented for purposes of example only, not limitations. It is not exhaustive and does not limit the invention to the precise form disclosed. Modifications and variations are possible in light of the above teachings or may be acquired from practicing of the invention, without departing from the breadth or scope.

In the claims, the words 'comprising', 'including' and 'having' do not exclude the presence of other elements or steps then those listed in a claim. The terms "a" or "an," as used herein, are defined as one or more than one. Unless stated otherwise, terms such as "first" and "second" are used to arbitrarily distinguish between the elements such terms describe. Thus, these terms are not necessarily intended to indicate temporal or other prioritization of such elements. The fact that certain measures are recited in mutually different claims does not indicate that a combination of these measures cannot be used to advantage.

While various embodiments of the present invention have been illustrated and described, it will be clear that the present invention is not limited to these embodiments only. Numerous modifications, changes, variations, substitutions, and equivalents will be apparent to those skilled in the art, without departing from the spirit and scope of the present invention, as described in the claims.

## Claims

1. A method for offering value-added services on a transaction initiated at a terminal device, the method comprising:
generating, by a server, a reference identifier for the transaction;
storing, by the server, the reference identifier and service details of one or more value-added services that are applicable on the transaction, in a database, wherein the reference identifier is communicated to the terminal device;
receiving, by the server from the terminal device, a service request for offering a first value-added service of the one or more value-added services on the transaction, wherein the service request includes the reference identifier;
retrieving, by the server from the database, the service details of the first value-added service based on the reference identifier included in the service request; and
communicating, by the server to the terminal device, a service response including the retrieved service details for offering the first value-added service on the transaction.

2. The method of claim 1, further comprising:
receiving, by the server from the terminal device, an authorization request for authorizing the transaction when the transaction is initiated at the terminal device; and
communicating, by the server, the authorization request to an issuer that corresponds to the transaction for authorizing the transaction.

3. The method of claim 2, further comprising:
receiving, by the server from the issuer, an authorization response indicating whether the transaction is authorized based on the authorization request; and
communicating, by the server, the authorization response including the reference identifier to the terminal device.

4. The method of claim 3, further comprising determining, by the server, an eligibility of the transaction for the one or more value-added services based on the authorization response, wherein the service details of the one or more value-added services are stored in the database when the transaction is determined to be eligible for the one or more value-added services.

5. A system for offering value-added services on a transaction initiated at a terminal device, the system comprising:
a payment network server that is configured to:
generate a reference identifier for the transaction,
store, in a database, the reference identifier and service details of one or more value-added services that are applicable on the transaction, wherein the reference identifier is communicated to the terminal device,
receive, from the terminal device, a service request for offering a first value-added service of the one or more value-added services on the transaction, wherein the service request includes the reference identifier,
retrieve, from the database, the service details of the first value-added service based on the reference identifier included in the service request, and
communicate, to the terminal device, a service response including the retrieved service details for offering the first value-added service on the transaction.

6. The system of claim 5, wherein the payment network server is further configured to:
receive, from the terminal device, an authorization request for authorizing the transaction when the transaction is initiated at the terminal device, and
communicate the authorization request to an issuer that corresponds to the transaction for authorizing the transaction.

7. The system of claim 6, wherein the payment network server is further configured to:
receive, from the issuer, an authorization response indicating whether the transaction is authorized based on the authorization request, and
communicate the authorization response including the reference identifier to the terminal device.

8. The system of claim 7, wherein the payment network server is further configured to determine an eligibility of the transaction for the one or more value-added services based on the authorization response, wherein the service details of the one or more value-added services are stored in the database when the transaction is determined to be eligible for the one or more value-added services.

9. The method of claim 3 or claim 4, further comprising extracting, by the server, one or more transaction parameters from the authorization response received from the issuer; or
the system of claim 7 or claim 8, wherein the payment network server is further configured to extract one or more transaction parameters from the authorization response received from the issuer.

10. The method of claim 9, further comprising storing, by the server, the one or more transaction parameters in the database, such that the one or more transaction parameters and the service details of the one or more services that are stored in the database are accessible by way of the reference identifier; or
the system of claim 9, wherein the payment network server is further configured to store the one or more transaction parameters in the database, such that the one or more transaction parameters and the service details of the one or more services that are stored in the database are accessible by way of the reference identifier.

11. The method or system of claim 9 or claim 10, wherein the one or more transaction parameters include a transaction amount, a transaction date, a transaction time, and a transaction card number, and wherein the reference identifier is different from the transaction card number.

12. The method of any of claims 1 to 4 or of any one of claims 9 to 11, or the system of any one of claims 5 to 11, wherein, based on the service response, the service details of the first value-added service are presented on the terminal device through a user interface.

13. The method of any of claims 1 to 4 or of any one of claims 9 to 12, wherein the service details of each service include a service type, a service eligibility indicator, and a set of service parameters or
the system of any one of claims 5 to 12, wherein the service details include a service type, a service eligibility indicator, and a set of service parameters.

14. The method of any of claims 1 to 4 or of any one of claims 9 to 13, or the system of any one of claims 5 to 13, wherein the service request is triggered, based on the authorization response, by a service application that is executed on the terminal device.
